# FASCICULE DE BREVET EUROPEEN

(11) **EP 0 936 560 B1**
(45) Date de publication et mention de la délivrance du brevet: **13.06.2001**
(21) Numéro de dépôt: 99400302.8
(22) Date de dépôt: 09.02.1999
(51) Int. Cl.: G06F 13/40

(54) **Dispositif de transmission bi-directionnelle**
Vorrichtung zur bidirektionalen Übertragung
Device for bidirectional transmission

(30) Priorité: 10.02.1998 FR 9801559
(43) Date de publication de la demande: 18.08.1999
(73) Titulaire: STMicroelectronics S.A., 94250 Gentilly (FR)
(72) Inventeur: Meyer, Jacques, Cabinet Ballot-Schmit, 94230 Cachan (FR)
(74) Mandataire: Ballot, Paul

(56) Documents cités:
- US-A- 5 202 593
- US-A- 5 440 182
- US-A- 5 689 196

## Description

La présente invention concerne un dispositif de transmission d'informations numériques. L'invention s'applique plus particulièrement à la transmission d'informations numériques sur un conducteur bi-directionnel.

On connaît différents bus de transmission bi-directionnelle, utilisant un ou plusieurs conducteurs bi-directionnels pour transmettre des données numériques. On peut citer par exemple le bus dit I2C mis au point par Philips, très utilisé notamment dans le domaine audio et vidéo. Ce bus comprend des lignes uni-directionnelles qui sont une ligne d'alimentation pour la masse, une ligne d'alimentation pour la tension d'alimentation positive (5 volts par exemple). Ce bus comprend aussi une ligne pour transmettre un signal d'horloge, qui peut être uni-directionnelle mais aussi bi-directionnelle, par exemple dans le cas où l'on a plusieurs maîtres sur le bus. Ce bus comprend en outre une ligne bi-directionnelle pour les données numériques à transmettre. Quand aucune donnée n'est transmise, cette ligne est tirée à un potentiel positif par un dispositif de tirage. Ce dispositif de tirage est composé d'une résistance.

Quand un circuit maître ou esclave veut transmettre des données sur la ligne bi-directionnelle, il prend la main sur cette ligne pour imposer des impulsions négatives selon un protocole déterminé, à la cadence horloge, correspondant à la suite de "1" et de "0" des informations à transmettre (adresses et données).

Or, quand on veut réaliser un système électronique pour une application, on choisit les différents circuits électroniques nécessaires pour réaliser les différentes fonctions, dans les catalogues des différents fournisseurs de circuits électroniques. Selon les domaines, par exemple, selon que l'on cherche un microprocesseur, un amplificateur audio ou tuner, une mémoire statique ou dynamique, une mémoire non volatile ou autres, les technologies disponibles ne sont pas toujours équivalentes. Par exemple, on sait que l'une des tendances actuelles est au développement des technologies et des structures de circuits capables de fonctionner à basse tension d'alimentation : 2,5 volts et moins. S'agissant de microprocesseurs et de mémoires, de tels circuits sont déjà disponibles, fonctionnant sous 2,5 volts par exemple. Mais s'agissant de circuits qui nécessitent beaucoup de puissance (d'un tuner par exemple), on peut ne trouver que des circuits fonctionnant sous 5 volts.

Si on veut utiliser dans un même système électronique, des circuits alimentés sous des tensions différentes, il faut donc prévoir d'adapter les niveaux des données à transmettre.

Par ailleurs, certains circuits sont très sensibles au bruit, comme par exemple les amplificateurs.

Si on a un système comprenant beaucoup de circuits électroniques communiquant par le même bus de transmission, un circuit comme le tuner va être très perturbé par toutes les informations transmises sur ce bus qui ne lui sont pas destinées.

Ainsi, le problème technique qui se pose dans l'invention concerne un bus de transmission bi-directionnelle. Dans l'invention, on cherche à limiter le bruit ainsi qu'à permettre la connexion sur un même bus de transmission bi-directionnelle de différents circuits alimentés sous des tensions différentes.

Une solution à ce problème technique a été trouvée, qui consiste, pour un circuit de tension d'alimentation différente ou à isoler, à connecter ce circuit à cette ligne bi-directionnelle, au travers d'un répéteur bi-directionnel selon l'invention. Telle que caractérisée l'invention concerne un dispositif de transmission numérique bi-directionnelle sur un bus comprenant au moins une ligne bi-directionnelle. Selon l'invention ce dispositif comprend au moins un répéteur bi-directionnel entre un premier tronçon et un deuxième tronçon de la dite ligne, chaque tronçon étant connecté à au moins un circuit électronique, un premier dispositif de tirage à un premier niveau logique étant placé sur le premier tronçon, un deuxième dispositif de tirage à un premier niveau logique étant placé sur le deuxième tronçon, ledit répéteur comprenant en outre un premier dispositif de tirage à un deuxième niveau logique (zéro) connecté au premier tronçon et un deuxième dispositif de tirage à un deuxième niveau logique (zéro) connecté au deuxième tronçon, les dits dispositifs de tirage au deuxième niveau logique étant commandés par un circuit logique connecté en entrées au premier tronçon et au deuxième tronçon tel que les dispositifs de tirage au deuxième niveau logique ne soient pas actifs simultanément et à un signal conditionnel fourni par un circuit conditionnel, ledit circuit conditionnel étant commandé par un circuit électronique connecté au premier tronçon pour autoriser ou empêcher la transmission entre les deux tronçons.

Ce répéteur permet d'isoler le circuit en ne laissant passer aucune information vers ce circuit qui ne lui serait pas destinée. Ce répéteur permet de connecter activement ce circuit au bus uniquement lorsque les informations sur ce bus lui sont destinées et/ou quand lui-même transmet des informations.

Ce répéteur permet aussi de connecter sur un même bus bi-directionnel des circuits fonctionnant sous des tensions d'alimentation différentes, en réalisant une adaptation de niveau dans les deux sens.

En outre, un tel répéteur permet avantageusement de prévoir des dispositifs de tirage différents de chaque côté du répéteur, permettant d'adapter ce dispositif de tirage à l'impédance de ligne de chaque côté du répéteur.

L'invention s'applique à un système comprenant des circuits électroniques sur un bus bi-directionnel.

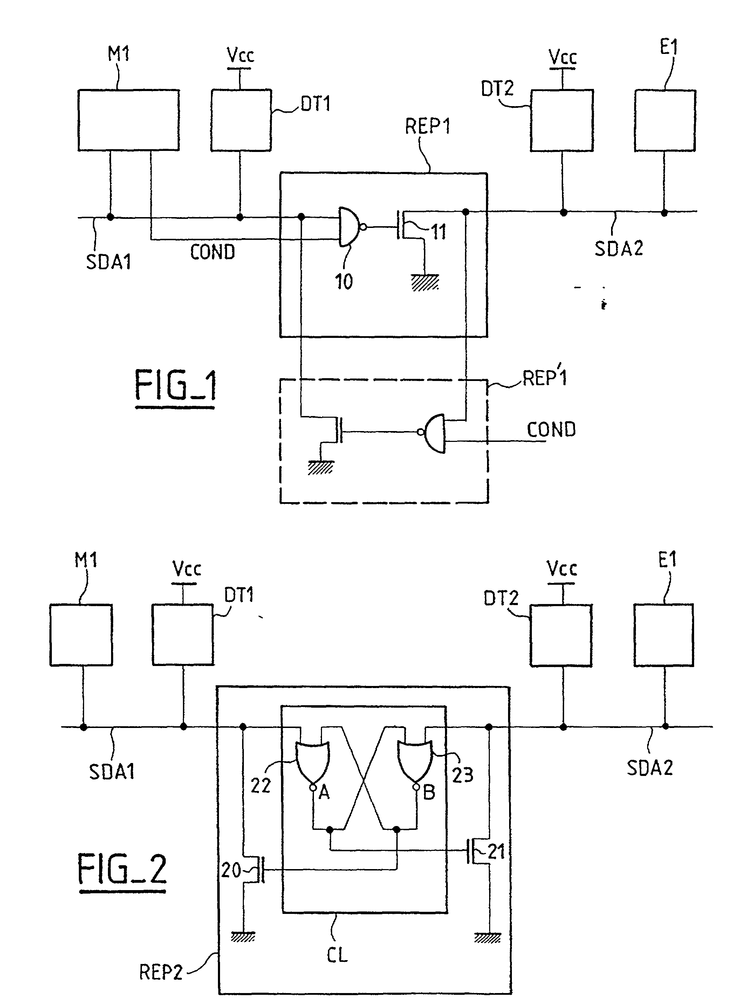

D'autres caractéristiques et avantages de l'invention sont détaillés dans la description suivante faite à titre indicatif et nullement limitatif et en référence aux dessins annexés, dans lesquels : - la figure 1 montre un exemple d'une réalisation d'un répéteur, mais non adapté à une transmission bi-directionnelle;
- la figure 2 montre un exemple de réalisation d'un répéteur bi-directionnel muni d'un circuit logique selon l'invention.
- la figure 3 représente un schéma détaillé d'un répéteur bi-directionnel selon l'invention, comprenant des moyens de commande d'isolation.

Dans la description qui suit, on utilise par convention une logique positive, avec un premier niveau logique qui correspond à un niveau haut positif et un deuxième niveau logique qui correspond à la masse. L'invention ne se limite pas à cette convention. L'homme du métier peut tout aussi bien retenir une logique négative, et effectuera sans difficultés les adaptations nécessaires.

La figure 1 montre un répéteur REP1 conditionnel, unidirectionnel placé sur une ligne bi-directionnelle, séparant cette ligne en deux tronçons de ligne SDA1 et SDA2. Un dispositif de tirage est prévu pour chaque tronçon de ligne. On a ainsi un dispositif de tirage DT1 sur le tronçon SDA1 et un dispositif de tirage DT2 sur l'autre tronçon SDA2 . Le répéteur est placé entre les deux dispositifs de tirage.

Réaliser un répéteur unidirectionnel ne pose pas de problèmes particuliers. C'est un simple interface à portes logiques. Dans l'exemple, ce répéteur unidirectionnel comprend une porte N_{AND} (N_{ON} E_{T}) 10 recevant sur une entrée, une extrémité d'un tronçon, dans l'exemple SDA1. L'autre extrémité de ce tronçon est connecté à au moins un circuit, par exemple un circuit maître (processeur) M1. Sur l'autre entrée de la porte NAND, un signal conditionnel C_{OND} est appliqué, provenant par exemple du circuit maître M1 connecté au tronçon SDA1. La sortie de la porte N_{AND} est appliquée sur la grille ou la base d'un transistor 11 connecté entre une extrémité de l'autre tronçon, dans l'exemple SDA2, et la masse. Ce deuxième tronçon SDA2 est connecté à au moins un autre circuit, dans l'exemple, un circuit esclave (mémoire, tuner...) noté E1.

Le signal conditionnel permet d'autoriser la transmission d'un message à destination de l'esclave E1, à l'initiative de celui qui l'émet, le maître M1 dans l'exemple.

Si le signal conditionnel C_{OND} autorise la transmission, la porte 11 retransmet l'information appliquée sur sa grille, en tirant à la masse le tronçon SDA2, si le tronçon SDA1 est lui-même à la masse, ou en laissant le dispositif de tirage de ce tronçon SDA2 imposer le potentiel.

Ce dispositif particulièrement simple ne peut cependant pas être utilisé pour fonctionner en bi-directionnel.

En effet, si on duplique le répéteur dans l'autre sens, comme représenté en pointillé sur la figure 1 sous la référence R_{EP}1', si à un moment donné un circuit impose un zéro sur le tronçon SDA1, le tronçon SDA2 sera aussi tiré à zéro, par recopie par le premier répéteur R_{EP}1. Le deuxième répéteur R_{EP}1' agit de même, ce qui maintient le tronçon SDA1 à zéro. Le système reste ainsi verrouillé à zéro. Plus aucune information ne peut passer.

Pour que le répéteur puisse fonctionner en bi-directionnel, il faut que le tronçon SDA1 puisse revenir à l'état haut de repos, entraînant à sa suite le retour à l'état haut de l'autre tronçon SDA2.

Un exemple de réalisation d'un répéteur bi-directionnel muni d'un circuit logique conforme à l'invention est représenté sur la figure 2.

Le répéteur R_{EP}2 comprend un dispositif de tirage à zéro connecté à chacun des tronçons SDA1 et SDA2. On a ainsi dans l'exemple un premier transistor 20 connecté entre le tronçon SDA1 et la masse et un deuxième transistor 21 connecté entre le tronçon SDA2 et la masse. Le répéteur R_{EP}2 comprend aussi un circuit logique CL connecté en entrée à chacun des tronçons SDA1 et SDA2 pour commander les éléments de tirage à zéro, tel que les deux dispositifs de tirage à zéro ne soient pas actifs simultanément.

Dans l'exemple, le circuit logique CL comprend une première porte logique NON OU 22, recevant sur une entrée le premier tronçon SDA1 et une deuxième porte NON OU 23, recevant sur une entrée le deuxième tronçon SDA2. L'autre entrée de la porte NON OU 22 reçoit la sortie de la porte NON OU 23. L'autre entrée de la porte NON OU 23 reçoit la sortie de la porte NON OU 22. La sortie A de la porte 22 est en outre appliquée sur l'électrode de commande (grille ou base, selon que le transistor est un transistor MOS ou un transistor bipolaire) du transistor 21 de tirage à zéro du tronçon SDA2. La sortie B de la porte 23 est appliquée sur l'électrode de commande du transistor 20 de tirage à zéro du tronçon SDA1.

Le fonctionnement d'un tel dispositif est détaillé ci-après.

Au repos, quand aucune information n'est transmise sur le conducteur, les deux tronçons SDA1 et SDA2 sont tirés à leur niveau haut de repos, par les dispositifs de tirage DT1 et DT2. Les sorties A et B sont au même niveau logique 0.

Dès que l'un des tronçons est tiré à zéro par un circuit, les sorties A et B deviennent complémentaires l'une de l'autre et l'autre tronçon est aussi tiré à zéro. Par exemple, si le tronçon SDA1 passe à zéro, la sortie A passe à "1", ce qui fait conduire le transistor 23. Ce transistor tire le tronçon SDA2 à zéro. Mais comme la sortie A à "1" est appliquée en entrée de la porte NON OU 23, la sortie B reste inchangée, à zéro, quel que soit le niveau sur le tronçon SDA2. Il n'y a pas de rebouclage sur le tronçon SDA1. Le transistor 20 de tirage à zéro du tronçon SDA1 reste bloqué (non passant). Lorsque le tronçon SDA1 revient à l'état haut, relâché (absence de commande sur ce tronçon), le tronçon SDA2 repasse au niveau haut. On revient à l'état initial de repos.

Dans l'exemple représenté, les éléments de tirage à zéro dans le répéteur sont des transistors MOS. On peut tout aussi bien avoir des transistors bipolaires. Au lieu d'un seul transistor, on pourrait aussi prévoir un inverseur à drain ouvert (technologie MOS) ou collecteur ouvert (technologie bipolaire).

Avec un tel répéteur bi-directionnel selon l'invention, on peut connecter sur le tronçon SDA1 des circuits alimentés sous une première tension d'alimentation, par exemple, sous 2,5 volts et connecter sur le tronçon SDA2 d'autres circuits alimentés sous une tension d'alimentation différente de la première, par exemple sous 5 volts. Dans ce cas, les dispositifs de tirage au niveau haut seront différents. Le premier dispositif DT1 sera tel qu'il tirera à 2.5 volts le tronçon SDA1. Le deuxième dispositif DT2 sera tel qu'il tirera à 5 volts le tronçon SDA2.

Dans une même application, on peut ainsi utiliser des circuits de pointe, de technologies différentes, sans avoir de problèmes de niveaux pour la transmission d'information entre ces différents circuits. Il suffit de regrouper les circuits en deux ensembles, un premier connecté à un premier tronçon, regroupant les circuits alimentés sous une première tension d'alimentation, un deuxième connecté à un deuxième tronçon, regroupant les circuits alimentés sous une deuxième tension d'alimentation, et de placer un répéteur selon l'invention entre ces deux tronçons.

En outre, les éléments de tirage à zéro 20 et 21 selon l'invention peuvent être différents, c'est à dire dimensionnés de façon différente, permettant d'adapter chaque transistor de tirage à l'impédance du tronçon associé. En effet, si un tronçon est faiblement capacitif, on peut utiliser un élément de tirage à faible résistance, suffisant à tirer le tronçon à zéro avec un temps de réponse convenable. Tandis que pour une ligne fortement capacitive, on prévoira un transistor beaucoup plus gros, capable de tirer beaucoup de courant, adapté au tronçon associé. De cette façon, en dimensionnant convenablement les éléments de tirage à zéro, on obtient une consommation optimale pour ce circuit, la plus faible possible, sans pénaliser le temps de réponse.

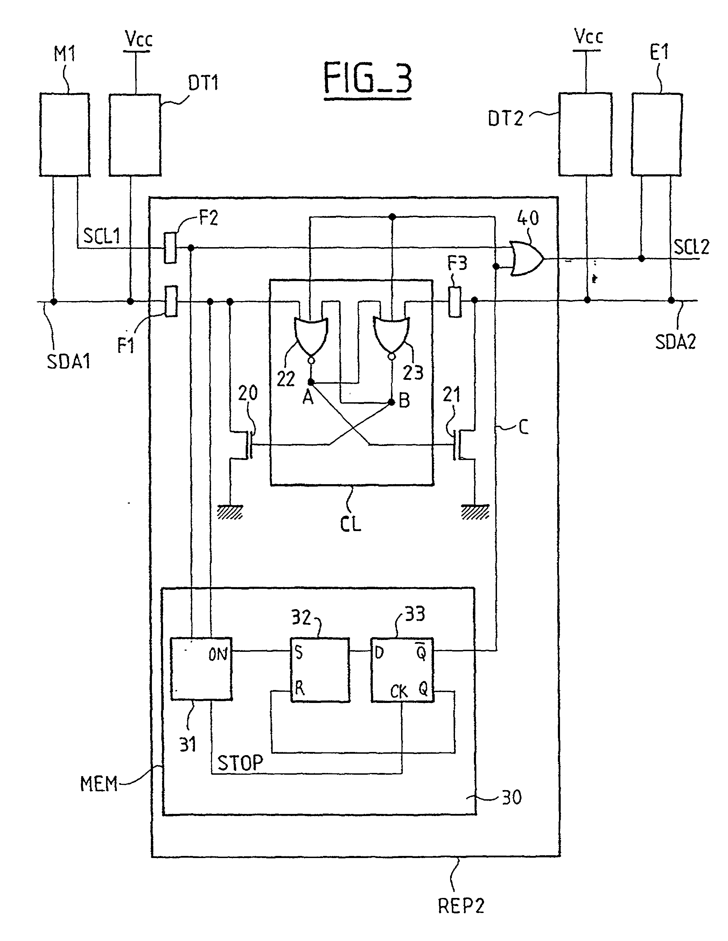

Dans un perfectionnement représenté sur la figure 3, le répéteur comprend en outre un circuit conditionnel 30, permettant de connecter activement les deux tronçons SDA1 et SDA2 ou au contraire de les isoler.

Le répéteur conditionnel permet d'isoler un circuit du reste du système. Techniquement, il est bien sûr possible d'avoir plusieurs circuits sur ce deuxième tronçon, mais en pratique, c'est un seul circuit que l'on veut isoler de tous les autres. Ce circuit à isoler est donc connecté au tronçon SDA2, les autres circuits du système étant connectés au tronçon SDA1. Dans l'exemple, le circuit à isoler est un circuit esclave E1.

Le circuit conditionnel est commandé par un circuit électronique connecté au premier tronçon SDA1. Le circuit conditionnel comprend un élément de mémorisation (MEM) pour positionner un signal conditionnel C. Ce signal conditionnel C est appliqué au circuit logique CL, pour lui permettre ou l'empêcher de prendre en compte le niveau sur les tronçons SDA1 et SDA2.

Dans l'exemple, ce signal conditionnel est ainsi appliqué sur une troisième entrée de chacune des portes 22 et 23. Quand ce signal conditionnel C est mis à 1, il permet de forcer la sortie des portes NON OU à zéro. Aucune transmission n'est possible entre les deux tronçons.

Quand au contraire, ce signal conditionnel C passe à zéro, il permet la transmission d'informations entre les deux tronçons, dans un sens ou l'autre. Par défaut, le signal conditionnel C est à 1, pour isoler le circuit E1. Il faut une commande d'activation pour permettre la transmission bi-directionnelle via le répéteur.

Le circuit conditionnel 30 pourrait être directement commandé par un circuit maître du tronçon SDA1, comme représenté sur la figure 1 (signal COND). Dans l'exemple représenté sur la figure 3, il est avantageusement commandé via le tronçon SDA1. Il peut ainsi être activé indifféremment par l'un quelconque parmi plusieurs circuits maîtres connectés à ce tronçon SDA1.

Le circuit conditionnel comprend alors un circuit détecteur d'activation 31, connecté en entrée au tronçon SDA1. Ce circuit 31 a pour fonction de reconnaître un message d'activation ou un message de fin, pour autoriser ou interdire la transmission bi-directionnelle à travers le répéteur en positionnant à un ou à zéro l'élément de mémorisation (MEM).

Dans l'exemple plus particulièrement représenté, on a représenté, en plus de la ligne bi-directionnelle pour la transmission d'information, la ligne de transmission du signal d'horloge. C'est une ligne uni-directionnelle SCL1, émise dans l'exemple par le circuit maître M1 connecté au tronçon SDA1. Dans l'exemple, cette ligne SCL1 est appliquée en entrée du circuit conditionnel 30, et plus particulièrement au circuit détecteur d'activation 31, pour lui permettre de décoder les messages d'activation et de fin.

L'élément de mémorisation (MEM) du circuit conditionnel 30 comprend dans l'exemple une bascule RS 32 et une bascule D (latch) 33, toutes deux commandées par le circuit détecteur d'activation 31. La sortie /Q de la bascule D 33 fournit le signal conditionnel C qui commande l'isolation ou la connexion active du répéteur.

La sortie Q de la bascule RS est appliquée sur l'entrée D de la bascule D 33. La sortie Q de cette bascule D 33 est rebouclée sur l'entrée de mise à zéro R de la bascule RS 32. La sortie /Q de la bascule D fournit le signal conditionnel C. Enfin, la sortie STOP du circuit détecteur 31 est appliquée sur l'entrée horloge CK de la bascule D.

Le fonctionnement est le suivant. Quand le circuit détecteur 31 détecte le message d'activation transmis par un maître sur le tronçon SDA1, il envoie une impulsion positive sur la première sortie ON, appliquée sur l'entrée S de mise à un de la bascule RS 32 et il transmet sur une deuxième sortie STOP, une impulsion d'horloge pour faire mémoriser le "1" dans la bascule D. La sortie /Q passe à zéro, ce qui permet au répéteur bi-directionnel de fonctionner.

Dans le même temps, la sortie Q de cette bascule D passe à 1, ce qui remet à zéro la bascule RS. La sortie de la bascule RS repasse donc à zéro.

Quand le circuit détecteur 31 détecte le message de fin, il émet une nouvelle impulsion d'horloge sur la sortie STOP. Cela fait mémoriser dans la bascule D l'état de la bascule RS qui est repassée à zéro. La bascule D mémorise donc un zéro. La sortie /Q de la bascule D, qui fournit le signal conditionnel C repasse donc à un : le répéteur est désactivé.

En pratique, le message d'activation peut être l'adresse du répéteur émis sur le tronçon SDA1 par un maître. Le message de désactivation est la fin du message de réponse de l'esclave E1.

De préférence, on prévoit que le répéteur comprend en outre une porte d'isolation 40 pour empêcher la transmission du signal d'horloge transmis sur la ligne uni-directionnelle SCL1, vers l'esclave El. Dans l'exemple, il s'agit d'une porte NON OU qui reçoit en entrées, la ligne SCL1 et le signal conditionnel C. La sortie de cette porte NON OU 40 est connectée à la ligne SCL2 connectée à l'entrée horloge de l'esclave E1.

Dans un exemple pratique où l'esclave est un tuner, l'utilisation d'un tel répéteur conditionnel permet de protéger au mieux le tuner des bruits de transmission sur la ligne des données et sur la ligne d'horloge, tout en permettant que ce tuner soit alimenté à une tension différente du reste du système.

On remarquera que le circuit détecteur 31 est dans l'exemple de réalisation décrit un simple décodeur d'une adresse et d'un message de fin. Il n'y a pas besoin de connaître le protocole de transmission. Ceci permet une réalisation particulièrement simple et peu coûteuse du répéteur bi-directionnel conditionnel de l'invention.

On pourra améliorer l'isolation contre le bruit en plaçant des filtres dans le sens des entrés sur le répéteur du tronçon SDA1 (F1), de la ligne SCL1 (F2) et du tronçon SDA2 (F3). Mais ces filtres ne sont pas obligatoires, et seront évités s'ils nuisent trop au temps de transmission désiré dans l'application, le répéteur lui-même ralentissant déjà la transmission.

En pratique, dans un système applicatif, on peut prévoir un répéteur entre deux ensembles de circuits alimentés sous une alimentation différente. On pourra aussi prévoir selon l'invention plusieurs répéteurs conditionnés, chaque répéteur conditionné permettant d'isoler un circuit électronique associé.

## Revendications

1. Dispositif de transmission numérique bi-directionnelle sur un bus comprenant au moins une ligne bi-directionnelle, comprenant au moins un répéteur bi-directionnel (R_{EP}2) entre un premier tronçon (SDA1) et un deuxième tronçon (SDA2) de la dite ligne, chaque tronçon étant connecté à au moins un circuit électronique (M1, E1), un premier dispositif (DT1) de tirage à un premier niveau logique (Vcc) étant placé sur le premier tronçon (SDA1), un deuxième dispositif (DT2) de tirage à un premier niveau logique (Vcc) étant placé sur le deuxième tronçon (SDA2), ledit répéteur comprenant en outre un premier dispositif de tirage (20) à un deuxième niveau logique (zéro) connecté au premier tronçon (SDA1) et un deuxième dispositif de tirage (21) à un deuxième niveau logique (zéro) connecté au deuxième tronçon (SDA2), les dits dispositifs de tirage au deuxième niveau logique étant commandés par un circuit logique (CL) connecté en entrées au premier tronçon et au deuxième tronçon tel que les dispositifs de tirage au deuxième niveau logique ne soient pas actifs simultanément et à un signal conditionnel (C) fourni par un circuit conditionnel (30), ledit circuit conditionnel étant commandé par un circuit électronique (M1) connecté au premier tronçon (SAD1) pour autoriser ou empêcher la transmission entre les deux tronçons.

2. Dispositif de transmission selon la revendication 1, caractérisé en ce que ledit circuit logique (CL) comprend une première porte NON OU (22) et une deuxième porte NON OU (23), la première porte (22) étant connectée en entrée au premier tronçon (SDA1) et à la sortie (B) de la deuxième porte NON OU (23), la deuxième porte (23) étant connectée en entrée au deuxième tronçon (SDA2) et à la sortie (A) de la première porte (22), chacune des deux portes NON OU recevant en outre en entrée ledit signal conditionnel (C), et la sortie de la première porte (22) commandant le dispositif de tirage (21) au deuxième niveau logique du deuxième tronçon et la sortie de la deuxième porte (23) commandant le dispositif de tirage (20) au deuxième niveau logique du premier tronçon.

3. Dispositif de transmission selon l'une quelconque des revendications précédentes, caractérisé en ce que les dispositifs de tirage au premier niveau logique (DT1 et DT2) imposent un niveau de tension logique différent sur leur tronçon respectif.

4. Dispositif de transmission selon l'une quelconque des revendications précédentes, caractérisé en ce que les dispositifs de tirage au deuxième niveau logique (20 et 21) sont dimensionnés en fonction de l'impédance du tronçon auquel chacun est connecté.

5. Dispositif de transmission selon l'une quelconque des revendications précédentes, caractérisé en ce que ce circuit conditionnel (30) comprend un élément de mémorisation (MEM) pour commander l'état d'un signal conditionnel (C) appliqué au circuit logique (CL).

6. Dispositif de transmission selon la revendication 5, caractérisé en ce que le circuit conditionnel (30) comprend un circuit détecteur (31) connecté en entrée au premier tronçon (SDA1), pour détecter un message d'activation ou d'isolation et positionner le dit élément de mémorisation (MEM).

7. Dispositif de transmission selon l'une quelconque des revendications précédentes, le, bus comprenant en outre une ligne (SCL1) pour la transmission d'un signal d'horloge, caractérisé en ce que le signal conditionnel (C) est appliqué à une porte logique d'isolation (40) recevant également le signal d'horloge, pour permettre ou non la transmission du dit signal d'horloge vers le ou les circuits connectés au deuxième tronçon.

8. Système comprenant des circuits électroniques connectés à un bus de transmission numérique bi-directionnelle, comprenant un répéteur (R_{EP}2) placé entre un premier tronçon (SDA1) et un deuxième tronçon (SDA2) du bus selon l'une quelconque des revendications 1, 2 et 4 à 6 en combinaison avec la revendication 3, caractérisé en ce qu'un premier ensemble de circuits électroniques alimentés sous une première tension d'alimentation est connecté au premier tronçon (SDA1), et en ce qu'un deuxième ensemble de circuits électroniques alimentés sous une deuxième tension d'alimentation, est connecté au deuxième tronçon.

9. Système comprenant des circuits électroniques connectés à un bus de transmission numérique bi-directionnelle, caractérisé en ce qu'il comprend au moins un répéteur selon l'une quelconque des revendications 1 à 7 associé à au moins un desdits circuits électroniques.

## Patentansprüche

1. Vorrichtung zur bidirektionalen digitalen Übertragung auf einem Bus, der mindestens eine bidirektionale Leitung aufweist, die mindestens einen bidirektionalen Verstärker (REP2) zwischen einem ersten Abschnitt (SDA1) und einem zweiten Abschnitt (SDA2) der Leitung aufweist, wobei jeder Abschnitt mit mindestens einer elektronischen Schaltung (M1, E1) verbunden ist, wobei eine erste Vorrichtung (DT1) zum Ziehen auf einen ersten logischen Pegel (Vcc) im ersten Abschnitt (SDA1) und eine zweite Vorrichtung (DT2) zum Ziehen auf einen ersten logischen Pegel (Vcc) im zweiten Abschnitt (SDA2) angeordnet ist, wobei der Verstärker außerdem eine erste Vorrichtung (20) zum Ziehen auf einen zweiten logischen Pegel (Null) verbunden mit dem ersten Abschnitt (SDA1) und eine zweite Vorrichtung (21) zum Ziehen auf einen zweiten logischen Pegel (Null) verbunden mit dem zweiten Abschnitt (SDA2) aufweist, wobei die Vorrichtungen zum Ziehen auf den zweiten logischen Pegel von einer Logikschaltung (CL) gesteuert werden, die an den Eingängen mit dem ersten und dem zweiten Abschnitt derart verbunden ist, daß die Vorrichtungen zum Ziehen auf den zweiten Pegel nicht gleichzeitig aktiv sind, und mit einem bedingten Signal (C), das von einer bedingten Schaltung (30) geliefert wird, wobei die bedingte Schaltung von einer elektronischen Schaltung (M1) gesteuert wird, die mit dem ersten Abschnitt (SDA1) verbunden ist, um die Übertragung zwischen den beiden Abschnitten zu erlauben oder zu verhindern.

2. Übertragungsvorrichtung nach Anspruch 1, dadurch gekennzeichnet, daß die Logikschaltung (CL) ein erstes NICHT/ODER-Gatter (22) und ein zweites NICHT/ODER-Gatter (32) aufweist, wobei das erste Gatter (22) am Eingang mit dem ersten Abschnitt (SDA1) und dem Ausgang (B) des zweiten NICHT/ODER-Gatters (23) verbunden ist, während das zweite Gatter (23) am Eingang mit dem zweiten Abschnitt (SDA2) und dem Ausgang (A) des ersten Gatters (22) verbunden ist, wobei jedes der beiden NICHT/ODER-Gatter außerdem am Eingang das bedingte Signal (C) empfängt, und der Ausgang des ersten Gatters (22) die Ziehvorrichtung (21) auf den zweiten logischen Pegel des zweiten Abschnitts und der Ausgang des zweiten Gatters (23) die Ziehvorrichtung (20) auf den zweiten logischen Pegel des ersten Abschnitts steuert.

3. Übertragungsvorrichtung nach einem der vorhergehenden Ansprüche, dadurch gekennzeichnet, daß die Vorrichtungen zum Ziehen auf den ersten logischen Pegel (DT1 und DT2) ihrem jeweiligen Abschnitt einen unterschiedlichen logischen Spannungspegel aufzwingen.

4. Übertragungsvorrichtung nach einem der vorhergehenden Ansprüche, dadurch gekennzeichnet, daß die Vorrichtungen zum Ziehen auf den zweiten logischen Pegel (20 und 21) in Abhängigkeit von der Impedanz des Abschnitts bemessen sind, dem jede von ihnen zugeordnet ist.

5. Übertragungsvorrichtung nach einem der vorhergehenden Ansprüche, dadurch gekennzeichnet, daß die bedingte Schaltung (30) ein Speicherelement (MEM) aufweist, um den Zustand eines bedingten Signals (C) zu steuern, das an die Logikschaltung (CL) angelegt wird.

6. Übertragungsvorrichtung nach Anspruch 5, dadurch gekennzeichnet, daß die bedingte Schaltung (30) eine Detektorschaltung (31) aufweist, die am Eingang mit dem ersten Abschnitt (SDA1) verbunden ist, um eine Aktivierungs- oder eine Isolierungsnachricht zu erfassen und das Speicherelement (MEM) zu positionieren.

7. Übertragungsvorrichtung nach einem der vorhergehenden Ansprüche, bei der der Bus außerdem eine Leitung (SCL1) zur Übertragung eines Taktsignals aufweist, dadurch gekennzeichnet, daß das bedingte Signal (C) an ein logisches Isolierungsgatter (40) angelegt wird, das auch das Taktsignal empfängt, um die Übertragung des Taktsignals zu der oder den mit dem zweiten Abschnitt verbundenen Schaltung(en) zu ermöglichen oder nicht.

8. System mit elektronischen Schaltungen, die mit einem Bus zur bidirektionalen digitalen Übertragung verbunden sind, mit einem Verstärker (REP2), der zwischen einen ersten Abschnitt (SDA1) und einen zweiten Abschnitt (SDA2) der Busleitung geschaltet ist, gemäß einem der Ansprüche 1, 2 und 4 bis 6 in Kombination mit Anspruch 3, dadurch gekennzeichnet, daß eine erste Gruppe von elektronischen Schaltungen, die mit einer ersten Speisespannung gespeist werden, mit dem ersten Abschnitt (SDA1) verbunden ist, und daß eine zweite Gruppe von elektronischen Schaltungen, die mit einer zweiten Speisespannung gespeist werden, mit dem zweiten Abschnitt verbunden ist.

9. System mit elektronischen Schaltungen, die mit einem Bus zur bidirektionalen digitalen Übertragungs verbunden sind, dadurch gekennzeichnet, daß es mindestens einen Verstärker gemäß einem der Ansprüche 1 bis 7 zugeordnet zu mindestens einer der elektronischen Schaltungen aufweist.

## Claims

1. Device for bidirectional digital transmission on a bus comprising at least one bidirectional line, comprising at least one bidirectional repeater (REP2) between a first section (SDA1) and a second section (SDA2) of the said line, each section being connected to at least one electronic circuit (M1, E1), a first device (DT1) for pulling to a first logic level (Vcc) being placed on the first section (SDA1), a second device (DT2) for pulling to a first logic level (Vcc) being placed on the second section (SDA2), the said repeater also comprising a first device (20) for pulling to a second logic level (zero) connected to the first section (SDA1) and a second device (21) for pulling to a second logic level (zero) connected to the second section (SDA2), the said devices for pulling to the second logic level being controlled by a logic circuit (CL) connected at inputs to the first section and to the second section such that the devices for pulling to the second logic level are not active simultaneously and to a conditional signal (C) supplied by a conditional circuit (30), the said conditional circuit being controlled by an electronic circuit (M1) connected to the first section (SAD1) in order to enable or prevent transmission between the two sections.

2. Transmission device according to Claim 1, characterised in that the said logic circuit (CL) comprises a first NOR gate (22) and a second NOR gate (23), the first gate (22) being connected at an input to the first section (SDA1) and to the output (B) of the second NOR gate (23), the second gate (23) being connected at an input to the second section (SDA2) and to the output (A) of the first gate (22), each of the two NOR gates also receiving as an input the said conditional signal (C), and the output of the first gate (22) controlling the device (21) for pulling to the second logic level of the second section and the output of the second gate (23) controlling the device (20) for pulling to the second logic level of the first section.

3. Transmission device according to any one of the preceding claims, characterised in that the device for pulling to the first logic level (DT1 and DT2) impose different logic levels on their respective sections.

4. Transmission device according to any one of the preceding claims, characterised in that the devices for pulling to the second logic level (20 and 21) are sized according to the impedance of the section to which each is connected.

5. Transmission device according to any one of the preceding claims, characterised in that this conditional circuit (30) comprises a storage element (MEM) for controlling the state of the conditional signal (C) applied to the logic circuit (CL).

6. Transmission device according to Claim 5, characterised in that the conditional circuit (30) comprises a detector circuit (31) connected at an input to the first section (SDA1), in order to detect an activation or isolation message and position the said storage element (MEM).

7. Transmission device according to any one of the preceding claims, the bus also comprising a line (SCL1) for the transmission of a clock signal, characterised in that the conditional signal (C) is applied to a logic isolation gate (40) also receiving the clock signal, to allow or not the transmission of the said clock signal to the circuit or circuits connected to the second section.

8. System comprising electronic circuits connected to a bidirectional digital transmission bus, comprising a repeater (REP2) placed between a first section (SDA1) and a second section (SDA2) of the bus according to any one of Claims 1, 2 and 4 to 6 in combination with Claim 3, characterised in that a first set of electronic circuits supplied at a first supply voltage is connected to the first section (SDA1), and in that a second set of electronic circuits supplied at a second supply voltage is connected to the second section.

9. System comprising electronic circuits connected to a bidirectional digital transmission bus, characterised in that it comprises at least one repeater according to any one of Claims 1 to 7 associated with at least one of the said electronic circuits.
